# EUROPEAN PATENT SPECIFICATION

(11) **EP 4 755 181 B1**
(45) Date of publication and mention of the grant of the patent: **25.11.2026**
(21) Application number: 25176502.0
(22) Date of filing: 14.05.2025
(51) Int. Cl.: A01K 29/00, A61D 17/00

(54) **ANIMAL PREGNANCY DETERMINATION METHOD, DEVICE, COMPUTER-READABLE STORAGE MEDIUM, AND COMPUTER PROGRAM PRODUCT**
VERFAHREN ZUR BESTIMMUNG DER TRÄCHTIGKEIT VON TIEREN, VORRICHTUNG, COMPUTERLESBARES SPEICHERMEDIUM UND COMPUTERPROGRAMMPRODUKT
PROCÉDÉ DE DÉTERMINATION DE GESTATION D'ANIMAUX, DISPOSITIF, SUPPORT DE DONNÉES LISIBLE PAR ORDINATEUR ET PRODUIT PROGRAMME INFORMATIQUE

(30) Priority: 09.12.2024 CN 202411803210
(43) Date of publication of application: 10.06.2026
(73) Proprietor: Beijing Etag Technology Company., Ltd., Haidian District Beijing 100083 (CN)
(72) Inventor: ZHOU, Xingfu, Beijing, 100083 (CN); REN, Jiping, Beijing, 100083 (CN); PANG, Chao, Beijing, 100083 (CN); HU, Dongge, Beijing, 100083 (CN); DONG, Jiemin, Beijing, 100083 (CN); DING, Shijie, Beijing, 100083 (CN); LI, Jingkuo, Beijing, 100083 (CN); ZHOU, Jingyi, Beijing, 100083 (CN)
(74) Representative: Dilg, Haeusler, Schindelmann Patentanwaltsgesellschaft mbH

(56) References cited:
- CN-A- 107 027 650
- CN-A- 111 972 307
- CN-A- 116 708 522
- KR-A- 20230 080 720
- US-A1- 2022 192 151

## Description

### TECHNICAL FIELD

The present disclosure relates to the technical field of livestock breeding, and specifically to an animal pregnancy determination method, a device, a computer-readable storage medium, and a computer program product.

### BACKGROUND ART

At present, the scale production of female even-toed ungulate economic animals dominates and leads the industry, and the batch production mode is gradually accepted and widely used. The level of pregnancy rate indicator of each batch will have a direct impact on the NPD (non-productive days). If the non-pregnant economic animals are not found in time, it will cause a large amount of waste of production factors, such as feed and labor, which will seriously affect the production efficiency and economic benefits. However, there is no efficient and intelligent animal pregnancy determination method in the related art.

US2022/192151A1 discloses a livestock management system employing tags attached to animals. The tags are configured to locally and autonomously process data and physical parameters and determine certain activities and physical conditions of the livestock, such as estrus or feeding. However, its local and autonomous determination relies on computationally capable tags, increasing cost. Moreover, the system permits the use of implanted in the livestock sensors, which is an invasive approach.

### SUMMARY

The objective of embodiments of the present disclosure is to provide an animal pregnancy determination method, a device, a computer-readable storage medium, and a computer program product to realize the technical effect of efficiently determining whether an animal is pregnant or not. This object is achieved by an animal pregnancy determination method having the features of claim 1, a device having the features of claim 6, a computer-readable storage medium having the features of claim 7, and a computer program product having the features of claim 8, respectively.

In a first aspect, the embodiments of the present disclosure provide an animal pregnancy determination method, wherein the animal wears a communication transmitting device, and a communication receiving device, automatically and communicatively connected to the communication transmitting device in a preset range, is mounted in a feeding area of the animal, and the method includes:
obtaining animal behavior data received by the communication receiving device, wherein the animal behavior data is collected when the communication transmitting device enters the preset range; the animal behavior data includes body temperature data and feeding data; the body temperature data is collected by the communication transmitting device; and the feeding data is determined based on communication interaction data between the communication transmitting device and the communication receiving device; and
determining that the animal is pregnant when the animal behavioral data is consistent with a change rule of the physiological sign of an animal during pregnancy.

In the above realization process, by having the animal to be determined for pregnancy wear the communication transmitting device and mounting a communication receiving device automatically connected to the communication transmitting device in the preset range in its feeding area, the body temperature and the feeding data of the animal can be efficiently collected. When these data are consistent with the change rule of the physiological sign of the animal during pregnancy, it can automatically and accurately determine that the animal is pregnant, which improves the efficiency of animal pregnancy determination.

Further, the animal behavioral data includes behavioral data of a current time point and behavioral data of a historical time point, wherein the behavioral data of the current time point includes body temperature data and feeding data of the current time point, and the behavioral data of the historical time point includes body temperature data and feeding data of the historical time point, and the step of determining that the animal is pregnant when the animal behavioral data is consistent with a change rule of the physiological sign of an animal during pregnancy includes:
determining a difference between the behavioral data of the current time point and the behavioral data of the historical time point,
determining that the animal is pregnant when the difference is consistent with the change rule of the physiological sign.

In the above realization process, the behavioral data of the current time point and the historical time point of the animal, including the body temperature and feeding condition, are comprehensively considered. By comparing and analyzing the differences between these data, the change rule of the physiological sign of the animal over time can be more accurately captured. When these differences are consistent with the typical change rule of the physiological sign of the animal during pregnancy, it automatically determines that the animal is pregnant.

Further, the step of determining that the animal is pregnant when the difference is consistent with the change rule of the physiological sign includes:
determining that the animal is pregnant when the body temperature of the animal increases and feeding decreases at the current time point compared to the historical time point.

In the above realization process, the increase of body temperature and the decrease in feeding are one of the common physiological signs of the animal during pregnancy. By determining whether the animal is pregnant according to the change rule of the physiological sign, it can realize the accurate determination of the animal pregnancy status.

Further, the animal behavioral data includes the behavioral data of the current time point and behavioral data of a historical duration, and the step of determining that the animal is pregnant when the animal behavioral data is consistent with a change rule of the physiological sign of an animal during pregnancy includes:
determining that the animal is pregnant when it is determined that the body temperature of the animal tends to increase and a total feeding intake tends to decrease according to the behavioral data of the current time point and the behavioral data of the historical duration.

In the above realization process, by monitoring the behavioral data for a long duration, the changing trend of the animal body temperature and feeding can be more accurately observed, and the accuracy of pregnancy determination can be improved by determining whether the animal is pregnant based on this trend.

Further, the communication interaction data includes a communication frequency and a communication duration, and the method further includes:
determining a feeding frequency according to the communication frequency;
determining a feeding duration according to the communication duration; and
determining the total feeding intake according to the feeding frequency and the feeding duration.

In the above realization process, when the communication transmitting device worn by the animal is communicatively connected to the communication receiving device, it can indicate that the animal has entered the feeding area, wherein the number of times the animal entering the feeding area can be determined by the connection frequency; the duration of the animal entering the feeding area can be determined by the connection duration; and the total feeding intake can be determined based on the feeding frequency and the feeding duration.

Further, the method further includes:
determining that the animal is not pregnant when the animal behavior data is not consistent with the change rule of the physiological sign.

In the above realization process, when the acquired animal behavioral data is not consistent with the typical change rule of the physiological sign of the animal during pregnancy, it is determined that the animal is not pregnant.

Further, the body temperature data includes an average value of the body temperature of the animal in a preset duration.

In the above realization process, by acquiring the average value of the body temperature of the animal in the preset duration, it helps to eliminate outliers generated by transient fluctuations or measurement errors, thereby improving the accuracy and reliability of the body temperature data.

A second aspect of the embodiments of the present disclosure provides a device, and the device includes:
a processor,
configured to store a memory of processor-executable instructions, wherein
any one of the methods described in the first aspect is realized when the processor invokes the executable instructions.

A third aspect of the embodiments of the present disclosure provides a computer-readable storage medium with computer instructions stored thereon, wherein steps in any one of the methods described in the first aspect are realized when the computer instructions are executed by the processor.

A fourth aspect of the embodiments of the present disclosure provides a computer program product, wherein the computer program product includes a computer program, and any one of the methods in the first aspect is realized when the computer program is executed by the processor.

### BRIEF DESCRIPTION OF DRAWINGS

In order to more clearly illustrate the technical solutions in the embodiments of the present disclosure, the drawings to be used in the embodiments of the present disclosure will be briefly introduced below. For persons of ordinary skill in the field, other relevant drawings can be obtained according to these drawings without inventive efforts. For persons of ordinary skill in the field, other relevant drawings can be obtained according to these drawings without inventive efforts.
FIG. 1 shows a schematic flow diagram of an animal pregnancy determination method provided by the embodiments of the present disclosure;
FIG. 2 shows a schematic diagram of a communication transmitting device provided by the embodiments of the present disclosure;
FIG. 3 shows a schematic diagram of a positional relationship between a communication receiving device and a feeding device provided by the embodiments of the present disclosure;
FIG. 4 shows a schematic flow diagram of another animal pregnancy determination method provided by the embodiments of the present disclosure;
FIG. 5 shows a schematic flow diagram of another animal pregnancy determination method provided by the embodiments of the present disclosure; and
FIG. 6 shows a structural block diagram of a device provided by the embodiments of the present disclosure.

### DETAILED DESCRIPTION OF EMBODIMENTS

The technical solutions in the embodiments of the present disclosure will be described below in conjunction with the drawings in the embodiments of the present disclosure.

It should be noted that similar symbols and letters denote similar items in the following drawings, so that once an item is defined in a drawing, no further definition or explanation is required in the subsequent drawings. At the same time, in the description of the present disclosure, the terms "first", and "second", etc., are used only to differentiate the description, and are not to be understood as indicating or implying relative importance.

In the related art, the manual ultrasound is usually used to determine whether a female even-toed ungulate animal is pregnant or not during the latter half of a natural estrous period, and one week later, the manual ultrasound is again used to determine whether it is pregnant or not. In some cases, another week later, it is to determine whether it is pregnant or not by using the manual ultrasound again. It can be seen that in the related art, determining whether an animal is pregnant or not relies on human determination, which is unreliable and consumes a lot of manpower. There is no efficient and intelligent animal pregnancy determination method.

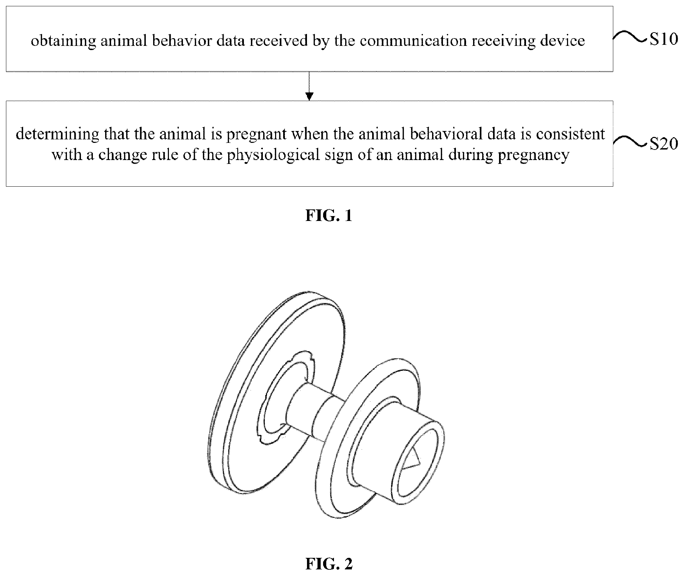

In response to any of the issues raised above, the embodiments of the present disclosure provide an animal pregnancy determination method. Referring to FIG. 1, FIG. 1 shows a schematic flow diagram of an animal pregnancy determination method provided by the embodiments of the present disclosure.

In the embodiment, the animal wears a communication transmitting device, and a communication receiving device, automatically and communicatively connected to a communication transmitting device in a preset range, is mounted in a feeding area of the animal. The method includes the following steps: S10~S20.

Step S10: obtaining animal behavior data received by the communication receiving device, wherein the animal behavior data is collected when the communication transmitting device enters the preset range; the animal behavior data includes body temperature data and feeding data; the body temperature data is collected by the communication transmitting device; and the feeding data is determined based on communication interaction data between the communication transmitting device and the communication receiving device.

It should be noted that the execution subject of the embodiment can be a server or a communication receiving device.

The animal can be a female even-toed ungulate economic animal, such as a sow.

### Communication transmitting device

Specific form: the communication transmitting device can be a small and lightweight device so that it can be easily worn on the animal without interfering with its normal activities. Exemplarily, the communication transmitting device can be worn on the ear of the animal. The communication transmitting device can also be an embedded sensor. The embodiment does not limit the specific form of the communication transmitting device.

Technology realization: as an example, the sensor, processor, and wireless communication module are integrated inside the communication transmitting device. The sensors are used to collect the animal body temperature data, and the processor is responsible for processing this data and formatting it into a format suitable for wireless communication. The wireless communication module is responsible for sending the processed data to the communication receiving device. Additionally, the animal behavior data can include an identification of the animal. The communication transmitting device is not only used to collect the animal body temperature data but also to send the acquired identification of the animal to the communication receiving device along with the animal behavior data.

### Communication receiving device

Specific form: the communication receiving device is mounted in the feeding area of the animal, such as near a feeding trough or at a drinking point. These devices can be wall-mounted, column-mounted, or embedded, so as to facilitate receiving data from the communication transmitting device. Exemplarily, the communication receiving device is integrated into the intelligent feeding device.

Technology realization: as an example, the receiving device transmits the animal behavior data to the server via a UHF (ultra-high frequency) antenna module, which is also mounted on the feeding area.

The wireless communication technology utilized between the communication transmitting device and the communication receiving device can be one or more of the following: Bluetooth, Wi-Fi, Zigbee, LoRa, NB-IoT, etc.

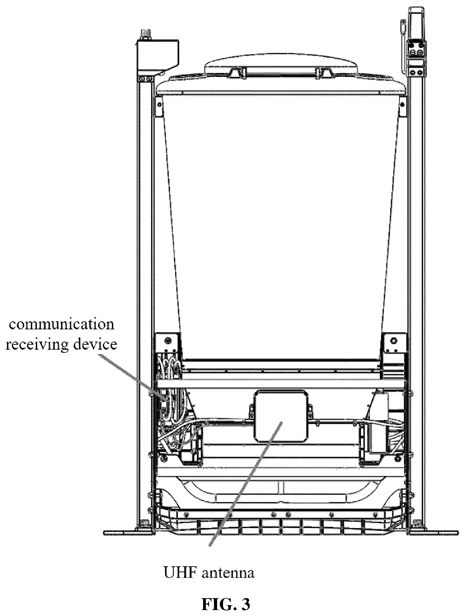

As an example, the communication transmitting device is a UHF RFID tag, i.e., a micro-energy sensing tag. The temperature sensor is integrated into the UHF RFID tag to collect the animal body temperature, wherein a temperature collection range of the temperature sensor is - 40°C to 80°C, with an accuracy of ±0.2°C. The communication receiving device is a UHF RFID reader, and the UHF RFID reader adopts an ARM Cortex-M3 processor, wherein the operating frequency is 72MHz, the capacity of built-in Flash memory is 512KB; and the RAM capacity is 64KB. The operating frequency of a UHF antenna module is 915MHz, and the communication distance is controlled to be within 0.5 meters of the near field. Based on UHF RFID technology, by using the UHF RFID reader and the corresponding micro-energy sensing tag, the near-field contactless identification and information reading for the animal can be realized, so as to realize precise positioning and behavior recording for animals. As shown in FIG. 2, FIG. 2 is a schematic diagram of a communication transmitting device provided by the embodiment of the present disclosure, where the communication transmitting device shown in the figure is worn on the ear of the animal. As shown in FIG. 3, FIG. 3 shows a schematic diagram of a positional relationship between a communication receiving device and a feeding device provided by the embodiments of the present disclosure. The figure shows the structure of the feeding device, and the communication receiving device and the UHF antenna are attached to the feeding device.

It should be understood that when the animal wears the communication transmitting device and enters into the preset range, the communication receiving device will be automatically and communicatively connected to the transmitting device. The transmitting device will send its collected body temperature data to the receiving device, and at the same time, the receiving device will also determine the animal feeding data (such as feeding duration and feeding frequency) according to the communication interaction data with the transmitting device. Additionally, the transmitting device can further send the identification of the animal to the receiving device along with the collected temperature data.

Step S20: determining that the animal is pregnant when the animal behavioral data is consistent with a change rule of the physiological sign of an animal during pregnancy.

It should be noted that the system will preset or learn the change rule of the physiological sign of the animal during pregnancy.

Exemplarily, a sow, during the pregnancy, usually shows a change rule of the physiological sign of increased body temperature and decreased food intake. When the collected animal behavior data is consistent with the rule or the degree of compliance reaches a certain threshold, it can determine that the animal is pregnant.

In the embodiment, the animal behavioral data is collected by using the communication interaction between the communication transmitting device and the communication receiving device, so as to realize accurate determination for the pregnant state of the animal, which has the advantages of non-invasiveness, real-time monitoring, continuous assessment, automation, and high accuracy.

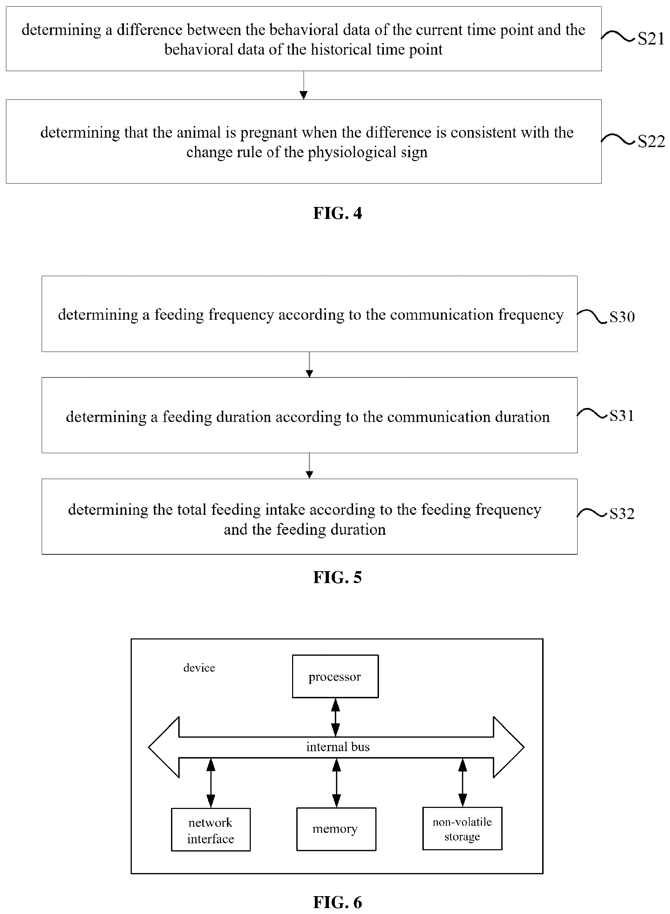

Based on any one embodiment described above, the animal behavioral data includes behavioral data of a current time point and behavioral data of a historical time point, wherein the behavioral data of the current time point includes body temperature data and feeding data of the current time point, and the behavioral data of the historical time point includes body temperature data and feeding data of the historical time point. The step S20 includes steps S21-step S22 shown in FIG. 4.

Step S21: determining a difference between the behavioral data of the current time point and the behavioral data of the historical time point.

It is to be understood that the body temperature data and the feeding data of the current time point can be the body temperature data and the feeding data in a 24-hour duration, or the body temperature data and the feeding data in a shorter duration. The body temperature data and the feeding data of the historical time point can be the body temperature data and the feeding data in a 24-hour duration, or the body temperature data and the feeding data in a shorter duration. The duration of the current time points and the historical time points shall be consistent.

Differences in behavioral data between time points are reflected in the magnitude of the rise and fall in body temperature and the increase and decrease in food intake.

Step S22: determining that the animal is pregnant when the difference is consistent with the change rule of the physiological sign.

Specifically, if the differences are consistent with the change rule of the physiological sign, such as an increased body temperature and a decreased food intake, it indicates that the animal is undergoing physiologic changes during pregnancy.

In the embodiment, by comparing behavioral data at current and historical time points, it can preliminarily determine whether the animal is undergoing a physiological change during pregnancy, and it can make a determination of pregnancy based on this.

Based on any one embodiment described above, the step S22 includes:
determining that the animal is pregnant when the body temperature of the animal increases and feeding decreases at the current time point compared to the historical time point.

Understandably, the increased body temperature is one of the common physiological reactions of the animal during pregnancy. During the early stage of pregnancy, the animal body temperature may rise slightly due to changes in hormone levels in the body. The trend of the increased body temperature can be observed by comparing the body temperature data at the current time point and the historical time point.

The decreased feeding is also another common physiologic reaction of the animal during pregnancy. Although changes in appetite of animals during pregnancy may be different, some animals may eat less during early pregnancy due to physical discomfort or hormonal changes. The trend of the decreased feeding intake can be observed by comparing the feeding data at the current time point and the historical time point.

When it observes the increased body temperature and decreased feeding intake of the animal at the current time point, it is considered to be consistent with the change rule of the physiological sign of the animal during pregnancy. Based on the regular change, it can preliminarily determine that the animal is pregnant.

Additionally, the increased body temperature and the decreased feeding intake may also be caused by other factors, such as illness and environmental changes. In order to ensure the accuracy of pregnancy determination, it can be further verified by the ultrasound, the blood test, etc.

In the embodiment, the determination condition of increased body temperature and decreased feeding intake is based on objective changes in the animal behavioral data and has a certain degree of accuracy. Meanwhile, the preliminary information about whether the animal is pregnant or not can be obtained non-invasively by monitoring the animal body temperature and feeding condition.

Based on any one embodiment described above, the animal behavioral data includes the behavioral data of the current time point and behavioral data of a historical duration. The step S20 includes:
determining that the animal is pregnant when it is determined that the body temperature of the animal tends to increase and a total feeding intake tends to decrease according to the behavioral data of the current time point and the behavioral data of the historical duration.

It is noted that the historical duration can be the previous day or the previous few days. It needs to be based on the same duration when making behavioral data comparisons. The animal body temperature change and the total feeding intake change curve of the animal during this duration can be drawn according to the behavioral data of the current time point and the behavioral data of the historical duration. If it is determined that the body temperature tends to increase and the total feeding intake tends to decrease, it can determine that the animal is pregnant.

In the embodiment, by comparing the animal behavioral data at the current time point with the behavioral data of the historical duration, when the body temperature of the animal is observed to be in an increased trend and the total feeding intake is in a decreased trend, it can preliminarily determine that the animal is pregnant.

Based on any one embodiment described above, the communication interaction data includes a communication frequency and a communication duration. The method further includes steps S30-steps S32 as shown in FIG. 5.

Step S30: determining a feeding frequency according to the communication frequency.

It is noted that the communication transmitting device is communicatively connected to the communication receiving device in a preset range, wherein the preset range can be 0.5 m, and the present embodiment does not limit the size of the preset range. Since the animal has formed a conditioned reflex by long-term feeding, when the communication transmitting device enters the preset range to communicate with the communication receiving device mounted in the feeding area, it indicates that the animal has an intention to feed.

Step S31: determining a feeding duration according to the communication duration.

It is noted that in some cases, the animal wearing the communication transmitting device may not have a need to eat when entering the feeding area, but based on the stay duration of the animal in the feeding area, it can further determine whether the animal enters the feeding area for eating.

Since the communication transmitting device and the communication receiving device will be automatically and communicatively connected in the preset range, the stay duration of the animal in the feeding area, i.e., the feeding duration, can be determined based on the communication duration.

Step S32: determining the total feeding intake according to the feeding frequency and the feeding duration.

Understandably, the product of the feeding frequency and the feeding duration is the total feeding intake. If the total feeding intake of the animal decreases and the body temperature increases in 24 hours today compared to the 24 hours last day, it is determined that the animal is pregnant.

In the embodiment, it is not necessary to directly observe the feeding behavior of the animal but to indirectly infer by analyzing its communication interaction data, which has non-invasive and automated advantages.

Based on any one embodiment described above, the method further includes:
determining that the animal is not pregnant when the animal behavior data is not consistent with the change rule of the physiological sign.

It is noted that if the animal behavioral data is not consistent with the change rule of the physiological sign of the animal during pregnancy, that is, it does not conform to the expected changes in physiological sign, it can be determined that the animal is not in a pregnant state currently. The determination can be based on the comparison of single or multiple behavioral data points, or it can be based on the consideration of the trend in data change.

In the embodiment, the animal behavior data is used to determine that the animal is not pregnant, which further improves the applicability of the solution.

Based on any one of the embodiments described above, the body temperature data includes an average value of the body temperature of the animal in a preset duration.

It should be understood that the preset duration can be determined according to the specific duration of the current time point foregoing.

In the specific realization, the communication transmitting device collects the body temperature data of the animal in 24 hours, calculates the average value of the body temperature in 24 hours, and sends the average value of the body temperature and the corresponding animal identification to the communication receiving device, so that the communication receiving device transmits both these data and the feeding data to the pregnancy algorithm module (wherein the pregnancy algorithm module is essentially a miniature intelligent decision-making body). The above steps of body temperature collection and data transmission are repeated daily. The pregnancy algorithm module starts the algorithm operation every day after receiving all the data. Compared with the data of the previous day, the average value of the body temperature and the total feeding intake both have two types of results including increase and decrease, i.e. there are four combinations as follows: increase in average value of the body temperature + increase in total feeding intake, increase in average value of the body temperature + decrease in total feeding intake, decrease in average value of the body temperature + increase in total feeding intake, and decrease in average value of the body temperature + decrease in total feeding intake. The pregnancy algorithm module can be trained to select one group of results to confirm pregnancy based on the actual pregnancy physiological sign reaction of the animal to be tested, and the determination result is sent to the cloud service platform. The cloud service platform consists of two parts including the database and management software, wherein the database and the management software are deployed in the cloud, so as to realize remote access and sharing of data and facilitate multi-location and multi-user collaboration. The database is used to classify and store the data generated during the process of pregnancy determination and to run algorithms as required. The management software is used for human-computer interaction, data query, etc.

In the embodiment, the average value of the body temperature in the preset duration is taken as the basis for determination. It can better reflect the real body temperature condition of the animal compared to the body temperature data at a single time point, which reduces misjudgment due to the instantaneous body temperature fluctuation, so as to improve the accuracy of the pregnancy determination.

Based on the method according to any above embodiments, the present disclosure further provides a structure schematic diagram of a device as shown in FIG. 6. As in FIG. 6, at the hardware level, the device includes a processor, an internal bus, a network interface, memory, and non-volatile storage, and of course can include other hardware required for the business. The processor reads the corresponding computer program from the non-volatile memory into memory, and then runs it, so as to realize the method according to any above embodiments.

Based on the method according to any above embodiments, the present disclosure further provides a computer storage medium, wherein the storage medium stores a computer program, and the computer program executes the method according to any above embodiments when executed by the processor.

Based on the method according to any above embodiments, the present disclosure further provides a computer program product, wherein the computer program product includes one or more computer programs or instructions. The computer programs or instructions can be stored in the computer-readable storage medium or transmitted from one computer-readable storage medium to another computer-readable storage medium. The computer program realizes the method according to any above embodiments when executed by the processor.

In the embodiments provided by the present disclosure, it should be understood that the disclosed device and method can also be realized in other ways. The embodiments of the device described above are only illustrative, for example, the flow schematic diagrams and block schematic diagrams in the drawings show the architecture, functionality, and operation that may be realized by the device, method, and computer program product according to the plurality of embodiments of the present disclosure. At this point, each box in the flow schematic diagram or block schematic diagram may represent a module, program segment, or part of code, and the module, program segment, or part of the code includes one or more executable instructions for realizing specified logical functions. It should also be noted that in some embodiments as the replacement, the functions indicated in the boxes may also occur in a different order than those indicated in the drawings. For example, two consecutive blocks can actually be executed essentially in parallel, and they can sometimes be executed in reverse order, which depends on the functions involved. It is also noted that each block in the block diagram and/or flow schematic diagram, and combinations of boxes in the block diagrams and/or flow schematic diagrams, can be realized by a dedicated hardware-based system that executes the specified function or action, or it can be realized by a combination of the dedicated hardware and computer instructions.

Additionally, the various functional modules in various embodiments of the present disclosure can be integrated together to form a separate part, individual modules can exist alone, or two or more modules can be integrated to form a separate part.

If realized in the form of a software functional module and sold or used as an individual product, the function can be stored in a computer readable storage medium. Based on this understanding, the technical solution of the present disclosure in essential, the part contributing to the prior art, or the part of the technical solutions can be embodied in the form of the software product. The computer software product is stored in a storage medium, including several instructions to cause a computer device (which may be a personal computer, a server, or a network device, etc.) to perform all or part of the steps of the method described in each embodiment of the present disclosure. The foregoing storage medium includes: U disk, portable hard disk, ROM (read only-memory), RAM (random access memory), disk, disc, or another medium that can store the program code.

The foregoing are merely embodiments of the present disclosure and are not used to limit the scope of the protection of the present disclosure. For those skilled in the art, the present disclosure may have various changes and variations. It should be noted that similar symbols and letters denote similar items in the following drawings, so that once an item is defined in a drawing, no further definition or explanation is required in the subsequent drawings.

The above-mentioned are only specific embodiments of the present disclosure, but the scope of protection of the present disclosure is not limited thereto. Any person skilled in the art can easily conceive variations or substitutions within the scope of the technology disclosed in the present disclosure, all of which shall be encompassed within the protection scope of the present disclosure. Therefore, the scope of protection of the present disclosure shall be governed by the scope of protection of the claims.

It should be noted that in the text, relational terms such as "first", "second", etc., in the description of the present disclosure are only used to distinguish one entity or operation from another entity or operation, and do not necessarily require or imply the existence of any such actual relationship or order between these entities or operations. Furthermore, the terms "include", "comprise", or any other variant thereof are intended to cover a non-exclusive inclusion so that a process, method, item, or device comprising a set of components includes not only those components, but also another component that is not explicitly listed, or component are inherent to this process, method, item, or device. Without further limitation, the fact that a component is defined by the phrase "including a ..." does not exclude the existence of another identical component in the process, method, item, or device including the component.

## Claims

1. An animal pregnancy determination method, wherein an animal wears a communication transmitting device; a communication receiving device, automatically and communicatively connected to a communication transmitting device in a preset range, is mounted in a feeding area of the animal; and the communication receiving device is communicatively connected to a pregnancy algorithm module, and the method comprises:
obtaining animal behavior data received by the communication receiving device, wherein the animal behavior data is collected when the communication transmitting device enters the preset range; the animal behavior data comprises body temperature data and feeding data; the body temperature data is collected by the communication transmitting device; and the feeding data is determined based on communication interaction data between the communication transmitting device and the communication receiving device;
transmitting the obtained animal behavior data to the pregnancy algorithm module by the communication receiving device; and
determining whether the animal behavioral data is consistent with a change rule of a physiological sign of an animal during pregnancy by the pregnancy algorithm module based on the obtained animal behavioral data, and confirming that the animal is pregnant when the animal behavioral data is consistent with the change rule of the physiological sign of the animal during pregnancy, wherein
the animal behavioral data comprises behavioral data of a current time point and behavioral data of a historical time point, the behavioral data of the current time point comprises body temperature data and feeding data of the current time point, and the behavioral data of the historical time point comprises body temperature data and feeding data of the historical time point; and the step of determining that the animal is pregnant when the animal behavioral data is consistent with a change rule of a physiological sign of an animal during pregnancy comprises:
determining a difference between the behavioral data of the current time point and the behavioral data of the historical time point, and
determining that the animal is pregnant when the difference is consistent with the change rule of the physiological sign, **characterized in that**
the step of determining that the animal is pregnant when the difference is consistent with the change rule of the physiological sign comprises:
determining that the animal is pregnant when the body temperature of the animal increases and feeding decreases at the current time point compared to the historical time point.

2. The method according to claim 1, wherein the animal behavioral data comprises behavioral data of a current time point and behavioral data of a historical duration; and the step of determining that the animal is pregnant when the animal behavioral data is consistent with a change rule of a physiological sign of an animal during pregnancy comprises:
determining that the animal is pregnant when it is determined that the body temperature of the animal tends to increase and a total feeding intake tends to decrease according to the behavioral data of the current time point and the behavioral data of the historical duration.

3. The method according to claim 2, wherein the communication interaction data comprises a communication frequency and a communication duration, and the method further comprises:
determining a feeding frequency according to the communication frequency;
determining a feeding duration according to the communication duration; and
determining the total feeding intake according to the feeding frequency and the feeding duration.

4. The method according to claim 1, wherein the method further comprises:
determining that the animal is not pregnant when the animal behavior data is not consistent with the change rule of the physiological sign.

5. The method according to claim 1, wherein the body temperature data comprises an average value of the body temperature of the animal in a preset duration.

6. A device, wherein the device comprises:
a processor,
configured to store a memory of processor-executable instructions, wherein
the processor realizes the method according to any one of claims 1-5 when invoking the executable instructions.

7. A computer-readable storage medium, storing computer instructions thereon, wherein the computer instructions execute steps of the method according to any one of claims 1-5 when executed by a processor.

8. A computer program product, wherein the computer program product comprises computer programs, and the method according to any one of claims 1-5 is realized when the computer programs are executed by a processor.

## Patentansprüche

1. Tierschwangerschaftsbestimmungsverfahren, wobei ein Tier eine Kommunikationsübertragungsvorrichtung trägt; eine Kommunikationsempfangsvorrichtung, die automatisch und kommunikativ mit einer Kommunikationsübertragungsvorrichtung in einem voreingestellten Bereich verbunden ist, in einem Fütterungsbereich des Tiers montiert ist; und die Kommunikationsempfangsvorrichtung kommunikativ mit einem Schwangerschaftsalgorithmusmodul verbunden ist, und das Verfahren folgendes aufweist:
Erhalten von Tierverhaltensdaten, die von der Kommunikationsempfangsvorrichtung empfangen werden, wobei die Tierverhaltensdaten gesammelt werden, wenn die Kommunikationsübertragungsvorrichtung in den voreingestellten Bereich eintritt; die Tierverhaltensdaten Körpertemperaturdaten und Fütterungsdaten aufweisen; die Körpertemperaturdaten von der Kommunikationsübertragungsvorrichtung gesammelt werden; und die Fütterungsdaten basierend auf Kommunikationsinteraktionsdaten zwischen der Kommunikationsübertragungsvorrichtung und der Kommunikationsempfangsvorrichtung bestimmt werden;
Übertragen der erhaltenen Tierverhaltensdaten an das Schwangerschaftsalgorithmusmodul durch die Kommunikationsempfangsvorrichtung; und
Bestimmen, ob die Tierverhaltensdaten mit einer Änderungsregel eines physiologischen Anzeichens eines Tiers während der Schwangerschaft übereinstimmen, durch das Schwangerschaftsalgorithmusmodul basierend auf den erhaltenen Tierverhaltensdaten, und Bestätigen, dass das Tier schwanger ist, wenn die Tierverhaltensdaten mit der Änderungsregel des physiologischen Anzeichens des Tiers während der Schwangerschaft übereinstimmen, wobei
die Tierverhaltensdaten Verhaltensdaten eines aktuellen Zeitpunkts und Verhaltensdaten eines historischen Zeitpunkts aufweisen, die Verhaltensdaten des aktuellen Zeitpunkts Körpertemperaturdaten und Fütterungsdaten des aktuellen Zeitpunkts aufweisen, und die Verhaltensdaten des historischen Zeitpunkts Körpertemperaturdaten und Fütterungsdaten des historischen Zeitpunkts aufweisen; und der Schritt des Bestimmens, dass das Tier schwanger ist, wenn die Tierverhaltensdaten mit einer Änderungsregel eines physiologischen Anzeichens eines Tiers während der Schwangerschaft übereinstimmen, folgendes aufweist:
Bestimmen einer Differenz zwischen den Verhaltensdaten des aktuellen Zeitpunkts und den Verhaltensdaten des historischen Zeitpunkts, und
Bestimmen, dass das Tier schwanger ist, wenn die Differenz mit der Änderungsregel des physiologischen Anzeichens übereinstimmt, **dadurch gekennzeichnet, dass**
der Schritt des Bestimmens, dass das Tier schwanger ist, wenn die Differenz mit der Änderungsregel des physiologischen Anzeichens übereinstimmt, folgendes aufweist:
Bestimmen, dass das Tier schwanger ist, wenn die Körpertemperatur des Tiers zum aktuellen Zeitpunkt im Vergleich zum historischen Zeitpunkt ansteigt und die Fütterung abnimmt.

2. Verfahren nach Anspruch 1, wobei die Tierverhaltensdaten Verhaltensdaten eines aktuellen Zeitpunkts und Verhaltensdaten einer historischen Dauer aufweisen; und der Schritt des Bestimmens, dass das Tier schwanger ist, wenn die Tierverhaltensdaten mit einer Änderungsregel eines physiologischen Anzeichens eines Tiers während der Schwangerschaft übereinstimmen, folgendes aufweist:
Bestimmen, dass das Tier schwanger ist, wenn gemäß den Verhaltensdaten des aktuellen Zeitpunkts und den Verhaltensdaten der historischen Dauer bestimmt wird, dass die Körpertemperatur des Tieres tendenziell ansteigt und eine Gesamtfütterung tendenziell abnimmt.

3. Verfahren nach Anspruch 2, wobei die Kommunikationsinteraktionsdaten eine Kommunikationsfrequenz und eine Kommunikationsdauer aufweisen, und das Verfahren ferner folgendes aufweist:
Bestimmen einer Fütterungsfrequenz gemäß der Kommunikationsfrequenz;
Bestimmen einer Fütterungsdauer gemäß der Kommunikationsdauer; und
Bestimmen der Gesamtfütterung gemäß der Fütterungsfrequenz und der Fütterungsdauer.

4. Verfahren nach Anspruch 1, wobei das Verfahren ferner folgendes aufweist:
Bestimmen, dass das Tier nicht schwanger ist, wenn die Tierverhaltensdaten nicht mit der Änderungsregel des physiologischen Anzeichens übereinstimmen.

5. Verfahren nach Anspruch 1, wobei die Körpertemperaturdaten einen Durchschnittswert der Körpertemperatur des Tieres in einer voreingestellten Dauer aufweisen.

6. Vorrichtung, wobei die Vorrichtung folgendes aufweist:
einen Prozessor,
der dazu konfiguriert ist, in einen Speicher prozessorausführbare Anweisungen zu speichern, wobei
der Prozessor das Verfahren nach einem der Ansprüche 1 bis 5 realisiert, wenn er die ausführbaren Anweisungen aufruft.

7. Computerlesbares Speichermedium, auf dem Computeranweisungen gespeichert sind, wobei die Computeranweisungen Schritte des Verfahrens nach einem der Ansprüche 1 bis 5 ausführen, wenn sie von einem Prozessor ausgeführt werden.

8. Computerprogrammprodukt, wobei das Computerprogrammprodukt Computerprogramme aufweist, und das Verfahren nach einem der Ansprüche 1 bis 5 realisiert wird, wenn die Computerprogramme von einem Prozessor ausgeführt werden.

## Revendications

1. Un procédé de détermination de gestation animale, selon lequel un animal porte un dispositif de transmission de communication ; un dispositif de réception de communication, connecté automatiquement et de manière communicante à un dispositif de transmission de communication à une portée préétablie, est monté dans une zone d'alimentation de l'animal ; et le dispositif de réception de communication est connecté de manière communicante à un module d'algorithme de gestation, et le procédé comprend :
- obtention de données de comportement de l'animal reçues par le dispositif de réception de communication, selon lequel les données de comportement de l'animal sont collectées quand le dispositif de transmission de communication entre dans la portée préétablie ; les données de comportement de l'animal comprennent des données de température corporelle et des données d'alimentation ; les données de température corporelle sont collectées par le dispositif de transmission de communication ; et les données d'alimentation sont déterminées sur la base de données d'interaction de communication entre le dispositif de transmission de communication et le dispositif de réception de communication ;
- transmission des données de comportement de l'animal obtenues au module d'algorithme de gestation par le dispositif de réception de communication ; et
- détermination de si les données de comportement de l'animal sont cohérentes avec une règle de changement d'un signe physiologique d'un animal pendant une gestation par le module d'algorithme de gestation sur la base des données de comportement de l'animal obtenues, et confirmation que l'animal est en gestation dans le cas où les données de comportement de l'animal sont cohérentes avec la règle de changement du signe physiologique de l'animal pendant une gestation, selon lequel
- les données comportementales de l'animal comprennent des données comportementales d'un point temporel actuel et des données comportementales d'un point temporel d'historique, les données comportementales du point temporel actuel comprennent des données de température corporelle et des données d'alimentation du point temporel actuel, et les données comportementales du point temporel d'historique comprennent des données de température corporelle et des données d'alimentation du point temporel d'historique ; et l'étape de détermination que l'animal est en gestation quand les données de comportement de l'animal sont cohérentes avec une règle de changement d'un signe physiologique d'un animal pendant une gestation comprend :
- détermination d'une différence entre les données comportementales du point temporel actuel et les données comportementales du point temporel d'historique, et
- détermination que l'animal est en gestation quand la différence est cohérente avec la règle de changement du signe physiologique, **caractérisé en ce que**
- l'étape de détermination que l'animal est en gestation quand la différence est cohérente avec la règle de changement du signe physiologique comprend :
- détermination que l'animal est en gestation quand la température corporelle de l'animal augmente et l'alimentation diminue au point temporel actuel comparé au point temporel d'historique.

2. Le procédé selon la revendication 1, selon lequel les données comportementales de l'animal comprennent des données comportementales à un point temporel actuel et des données comportementales d'une durée d'historique ; et l'étape de détermination que l'animal est en gestation quand les données de comportement de l'animal sont cohérentes avec une règle de changement d'un signe physiologique d'un animal pendant une gestation comprend :
- détermination que l'animal est en gestation quand il est déterminé que la température corporelle de l'animal tend à augmenter et qu'un apport alimentaire total tend à diminuer selon les données comportementales au point temporel actuel et les données comportementales de la durée d'historique.

3. Le procédé selon la revendication 2, selon lequel les données d'interaction de communication comprennent une fréquence de communication et une durée de communication, et le procédé en outre comprend :
- détermination d'une fréquence d'alimentation selon la fréquence de communication ;
- détermination d'une durée d'alimentation selon la durée de communication ; et
- détermination de l'apport alimentaire total selon la fréquence d'alimentation et la durée d'alimentation.

4. Le procédé selon la revendication 1, selon lequel le procédé comprend en outre :
- détermination que l'animal n'est pas en gestation quand les données de comportement de l'animal ne sont pas cohérentes avec la règle de changement du signe physiologique.

5. Le procédé selon la revendication 1, selon lequel les données de température corporelle comprennent une valeur moyenne de la température corporelle de l'animal sur une durée préétablie.

6. Un dispositif, dans lequel le dispositif comprend :
un processeur,
configuré pour stocker une mémoire d'instructions exécutables sur processeur,
dans lequel
le processeur réalise le procédé selon l'une quelconque des revendications 1 - 5 lors de l'invocation des instructions exécutables.

7. Un support de stockage lisible par ordinateur, sur lequel des instructions d'ordinateur sont stockées, dans lequel les instructions d'ordinateur exécutent des étapes du procédé selon l'une quelconque des revendications 1 - 5 quand elles sont exécutées par un processeur.

8. Un produit programme d'ordinateur, dans lequel le produit programme d'ordinateur comprend des programmes d'ordinateur, et le procédé selon l'une quelconque des revendications 1 - 5 est réalisé quand les programmes d'ordinateur sont exécutés par un processeur.
